# EUROPÄISCHE PATENTANMELDUNG

(11) **EP 2 952 538 A1**
(43) Veröffentlichungstag der Anmeldung: **09.12.2015**
(21) Anmeldenummer: 14170950.1
(22) Anmeldetag: 03.06.2014
(51) Int. Cl.: C08K 3/00, C08K 5/103, C08L 21/00

(54) **Diphenylguanidin-freie Kautschukmischungen enthaltend kurzkettige Alkylester des Glyzerins**

(71) Anmelder: LANXESS Deutschland GmbH, 50569 Köln (DE)
(72) Erfinder: Feldhues, Ulrich, 51465 Bergisch Gladbach (DE); Unterberg, Heinz, 41540 Dormagen (DE); Weidenhaupt, Hermann-Josef, 50259 Pulheim (DE); Wiedemeier-Jarad, Melanie, 41540 Dormagen (DE)

(57) **Zusammenfassung**

Die Erfindung betrifft im Wesentlichen Diphenylguanidin-freie Kautschukmischungen, enthaltend mindestens je einen Kautschuk, einen Kieselsäure-basierenden Füllstoff und/oder Ruß und kurzkettige Alkylester des Glyzerins, deren Herstellung, Verwendung und dadurch erhältliche Vulkanisate.

## Beschreibung

Die Erfindung betrifft im Wesentlichen Diphenylguanidin-freie Kautschukmischungen, enthaltend mindestens je einen Kautschuk, einen Kieselsäure-basierenden Füllstoff und/oder Ruß und kurzkettige Alkylester des Glyzerins, deren Herstellung und Verwendung, sowie die dadurch erhältlichen Vulkanisate nach dem Vulkanisationsverfahren, insbesondere in der Form von Reifen, Teilen von Reifen oder technischen Gummiartikeln.

Mit der Erfindung der Vulkanisation von Naturkautschuk wurde ein neuer Werkstoff geschaffen, dessen einzigartige Eigenschaften wesentlich zur Entwicklung der modernen Technik beigetragen hat. Zu Beginn des 20. Jahrhunderts erkannte man die beschleunigende Wirkung basischer organischer Verbindungen.

Aus der DRP 265221 ist bekannt, dass Piperidin zur Beschleunigung der Vulkanisation im Naturkautschuk sowie in synthetisch hergestellten Kautschuken verwendet wurde. Piperidin war giftig, sehr flüchtig und es roch unangenehm, so dass die Kautschukverarbeitende Industrie basische Alternativen zu Piperidin suchte und einsetzte.

In weiteren Patentveröffentlichungen werden beispielsweise Anilin und andere stickstoffhaltige organische Verbindungen wie Hexamethylentetramin, Thiocarbanilid als Beschleuniger beschrieben.

Generell bietet die Vernetzung von Kautschuken mit Schwefel-Beschleuniger-Systemen den Vorteil, dass durch die Verwendung unterschiedlicher Beschleuniger und deren Kombinationen die Verarbeitungs- und Produkteigenschaften über einen weiten Bereich variiert werden können, wie beispielsweise die Einstellung der Induktionsperiode (Scorch-Zeit) und der Reaktionsgeschwindigkeit. Zur Regulierung der Induktions- und Vulkanisationszeit, können den Kautschukmischungen sogenannte Zweitbeschleuniger zugesetzt werden. Zu den bekanntesten Zweitbeschleunigern zählen die Guanidin-Beschleuniger. Sie sind langsam wirkende Beschleuniger, mit denen die An (Scorch)- und/oder Ausvulkanisationszeit angepasst werden kann. In Kautschukmischungen werden sie beispielsweise mit 2 phr bezogen auf den Wirkstoff eingesetzt.

Die Spannungswertcharakteristik von Kautschukmischungen mit Guanidinen zeigt einen langsamen Anstieg und erreicht relativ spät das Maximum. Diese Beschleuniger ergeben, alleine eingesetzt, ein verhältnismäßig ungünstiges Fließzeit/Heizzeit-Verhältnis und zeigen eine relativ starke Reversion im Kautschukcompound, so dass sie häufig in Kombinationen mit Primär-Beschleunigern, wie beispielsweise Sulfenamid-basierenden Beschleunigern, eingesetzt werden.

Eine wichtige Funktion haben diese langsam wirkenden Beschleuniger in der Herstellung Treibstoff-sparender Silica-Reifen. Sie wechselwirken mit den Silanol-Gruppen und bewirken eine Reduktion der Füllstoff-Wechselwirkungen und der Viskosität. Sie steuern auch der verzögernden Wirkung saurer Füllstoffe entgegen.

Eine der in der Kautschukindustrie bedeutendsten Guanidin-Typen ist das Diphenylguanidin (DPG). DPG ist weit verbreitet. Es ist dem Fachmann bekannt, dass DPG unter Vulkanisationsbedingungen Anilin freisetzt. Vor diesem Hintergrund suchen Anwender, die durch die Anilin-Problematik sensibilisiert sind, nach einem neuen Zweitbeschleuniger.

In Patentoffenlegungen sind verschiedene DPG-reduzierte Mischungen beschrieben:
So wird in US 2010/0048775, US 7605201, US 6753374 und US 7714050 vorgeschlagen, in Kieselsäure-basierten Kautschukmischungen ganz oder teilweise die DPG-Menge durch ein spezielles Amin oder ein Thiuramdisulfid zu ersetzen.

In WO 2013/104492 wird eine Kautschukmischung beschrieben, die 0,65 phr DPG und 2 phr Polyole wie beispielsweise TMP beinhaltet.

FR 2984898 beschreibt Mischungen, enthaltend weniger als 0,45 phr DPG sowie 0,4 phr Aminoether-Alkohole (wie beispielsweise 2-(2-Aminoethoxy)ethanol).

FR 2984897 beschreibt Mischungen, enthaltend weniger als 0,5 phr DPG und weniger als 0,45 phr Ether-amine wie beispielsweise 3-(2-Ethylhexyloxy)propylamine.

FR 2984895 beschreibt Mischungen, enthaltend weniger als 0,5 phr DPG und ca. 3,0 phr Alkalimetalhydroxyde und/oder Erdalkalihydroxyde.

FR 2984896 beschreibt Mischungen, enthaltend weniger als 0,5 phr DPG und weniger als 8 phr eines primären Amines wie beispielsweise Hexadecylamin.

In den Veröffentlichungen wie beispielsweise in der US 2010/0048775, US 7605201, US 6753374, US 7714050, WO 2013/104492, FR 2984898, FR 2984897, FR 2984895 und FR 2984896 wird jedoch nur auf eine gleichbleibende, zum Teil auf eine längere Scorch-Zeit eingegangen.

Die Verwendung von Triacetin in Kautschukmischungen als "Lösungsmittel" für Cellulosederivate ist in EP 2604651 beschrieben, wobei die Zugabe von Triacetin und Cellulosederivaten aber zu verschlechterten Eigenschaften des Vulkanisats insbesondere des Abriebs führt.

Insbesondere die Verwendung von Triacetin als Additiv in unpolaren Kautschuk-Typen ist nicht beschrieben und aufgrund der unterschiedlichen Löslichkeitsparameter für den Fachmann auch nicht erfolgversprechend, da es bei der Herstellung einer Kautschukmischung mit guten Eigenschaften darauf ankommt, dass die Komponenten verträglich sind. Laut Röthemeyer und Sommer (Kautschuktechnologie, Hanser Verlag München Wien, 2. Ausgabe, 2006, ISBN-13: 978-3-446-40480-9, Seite 331-333) lässt sich anhand des Löslichkeitsparameters von Kautschuk und Weichmachern die Verträglichkeit des Weichmachers im Kautschuk abschätzen. Hierbei sollte in erster Annäherung die Differenz der Löslichkeitsparameter innerhalb von ± 10% liegen. In dem genannten Werk sind folgende Löslichkeitsparameter für Kautschuke angegeben:

| **Kautschuk** | **Löslichkeitsparameter (MPa)1/2** |
|---|---|
| EPDM (Ethylen/Propylen/Dien/-Kautschuk) | 16,1 |
| NR (Naturkautschuk) | 16,5 |
| BR (Butadien-Kautschuk) | 17,1 |
| SBR (Styrol/Butadien-Kautschuk) | 17,6 |
| CR (Chloropren-Kautschuk) | 19,0 |
| NBR (Acrylnitril-butadien-Kautschuk) | 19,0 |
| **Weichmacher** | |
| Glycerintriacetat (Triacetin) | 22,0* |

| | |
|---|---|
| * Durch Umrechnung des Wertes für Triacetin von 10,77 cal/m3 gemäß EP 1813310 mit dem Faktor 1 cal/m3 = 2,0455 MPa. | |

Anhand der Lehre von Röthemeyer und Sommer erwartet der Fachmann, dass Triacetin generell in unpolaren Kautschuken, d.h. z.B. in Kautschuken mit einem Löslichkeitsprodukt von nicht mehr als 17,6 nicht gut löslich sein sollte, da die Differenz der Löslichkeitsprodukte bereits 20% beträgt.

Der vorliegenden Erfindung liegt die Aufgabe zugrunde, im Wesentlichen Diphenylguanidin-freie Kautschukmischungen bereitzustellen, worunter Mischungen verstanden werden, welche maximal 1 phr, vorzugsweise weniger als 0,7 phr, besonders bevorzugt weniger als 0,4 phr, und ganz besonders bevorzugt weniger als 0,1 phr Diphenylguanidin aufweisen wobei die anwendungsrelevanten Eigenschaften, insbesondere die Scorchzeit (MS-t5), Mooney Viskosität, Bruchdehnung, Zugfestigkeit, Härte und Abrieb gegenüber Diphenylguanidin-haltigen Mischungen nicht wesentlich schlechter sind. Besonders bevorzugt sollten die Kautschukmischungen unpolare Kautschuke beinhalten. Die Einheit phr steht für Gewichtsteile bezogen auf den als 100 Gewichtsteile definierten Gehalt an Kautschuk in der Kautschukmischung.

Durch Ersatz des Diphenylguanidins sollten Kautschukmischungen erhalten werden, welche toxikologisch weniger bedenklich sind und das Problem der Anilin-Emission reduzieren bzw. gar nicht erst entstehen lassen.

Überraschend wurde nun gefunden, dass unter Verwendung kurzkettiger Alkylester des Glyzerins, mindestens je eines Kautschuks, eines Kieselsäure-basierenden Füllstoffs und/oder Ruß im Wesentlichen Diphenylguanidin-freie Kautschukmischung erhältlich sind, welche hervorragende Scorchzeiten (MS-t5) und verbesserte Abriebwerte bei guter Mooney Viskosität, Shore A Härte, Zugfestigkeit und Bruchdehnung aufweisen.

Besonders überraschend wurde gefunden, dass bei gemeinsamer Verwendung kurzkettiger Alkylester des Glyzerins zusammen mit dem Reversionsschutzmittel 1,6-Bis(N,N-dibenzylthiocarbamoyldithio)hexan (CAS-Nr. 151900-44-6) besonders niedrige Verlustfaktoren (tan delta 60°C) erhalten werden. Der Verlustfaktor (tan delta 60°C) ist ein Indikationswert für den Rollwiderstand. Je niedriger dieser Wert ist, desto niedriger ist der Rollwiderstand und damit übertragen auf den Autoreifen bzw. PKW, der Spritverbrauch.

Die vorliegende Erfindung betrifft daher im Wesentlichen Diphenylguanidin-freie Kautschukmischungen enthaltend zumindest jeweils
- einen Kautschuk,
- einen Kieselsäure-basierenden Füllstoff und/oder Ruß,
- einen kurzkettigen Alkylester des Glycerins gemäß Formel (I) 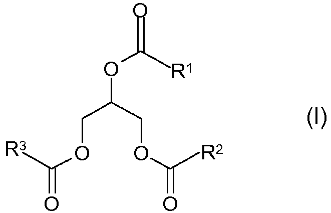 worin
   R¹, R², R³ unabhängig voneinander für Wasserstoff oder einen geradkettigen oder verzweigten C₁-C₄ -Alkylrest, vorzugsweise für einen Methylrest stehen,

Ein weiterer Gegenstand der vorliegenden Erfindung ist ein Verfahren zur Herstellung von im Wesentlichen Diphenylguanidin-freien gefüllten Kautschukmischungen, bei welchem man jeweils mindestens
- einen Kautschuk,
- einen Kieselsäure-basierenden Füllstoff und/oder Ruß,
- einen kurzkettigen Alkylester des Glycerins gemäß Formel (I) 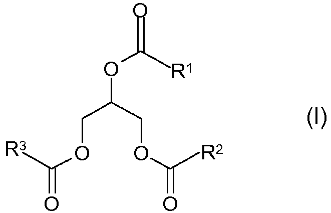 worin
   R¹, R², R³ unabhängig voneinander für Wasserstoff oder einen geradkettigen oder verzweigten C₁-C₄ -Alkylrest, vorzugsweise für einen Methylrest stehen,
bei Massetemperaturen von mindestens 40°C, vorzugsweise im Bereich von 40 bis 200°C besonders bevorzugt im Bereich von 80 bis 150°C mischt und anschließend nach Zugabe weiterer Vulkanisationschemikalien in üblicher Weise vulkanisiert. Typischerweise liegen die Scherraten bei der Mischung im Bereich von 1 - 1000 sec⁻¹, bevorzugt 1 - 100 sec⁻¹, Die Zugabe des kurzkettigen Alkylesters des Glycerins der Formel (I) kann allein oder zusammen mit einem oder mehreren weiteren Mischungsbestandteilen in beliebiger Reihenfolge erfolgen, auch bei höheren Temperaturen im Bereich von 80°C bis 200 °C, bevorzugt bei einer Temperatur von ca. 150°C.

Im Sinne der Erfindung sind Kautschukmischungen im Wesentlichen Diphenylguanidinfrei sofern der Gehalt an Diphenylguanidin ≤ 1phr, vorzugsweise < 0,7 phr, besonders bevorzugt < 0,4 phr und ganz besonders bevorzugt < 0,1 phr beträgt.

In einer bevorzugten Ausführungsform beträgt der aufsummierte Gehalt an Diphenylguanidin und anderen Guanidin-Derivaten in den erfindungsgemäßen Kautschukmischungen bzw. Vulkanisaten ≤ 1phr, vorzugsweise < 0,7 phr, besonders bevorzugt < 0,4 phr, meist bevorzugt < 0,1 phr.

In einer besonders bevorzugten Ausführungsform enthält die erfindungsgemäße Kautschukmischung weder Diphenylguanidin noch andere Guanidinderivate.

Typischerweise beträgt der Gehalt an Cellulose und/oder Cellulosederivaten, worunter insbesondere Umsetzungsprodukte von Cellulose mit Phenylisocyanat, n-Buttersäureanhydrid, Essigsäureanhydrid, Butylisocyanat, Stearylchlorid, Stearylisocyanat oder Buttersäurechlorid, bevorzugt jedoch Celluoloseacetat zu verstehen ist, in den erfindungsgemäßen Kautschukmischungen bzw. Vulkanisaten ≤ 1 phr, vorzugsweise < 0,5 phr, besonders bevorzugt < 0.1 phr und meist bevorzugt 0 phr.

Die erfindungsgemäße Kautschukmischung kann sowohl in Zink-freien als auch in Zinkhaltigen Kautschukvulkanisaten vorteilhaft eingesetzt werden.

Bevorzugt wird als Verbindung der Formel (I) Triacetin verwendet.

Die erfindungsgemäße Kautschukmischung enthält typischerweise von 0,1 bis 40 phr, bevorzugt von 0,2 bis 20 phr, besonders bevorzugt von 0,5 bis 15 phr, ganz besonders bevorzugt 1 bis 12 phr, weiter bevorzugt 2 bis 10 phr und meist bevorzugt 3 bis 8 phr Verbindungen der Formel (I).

Erfindungsgemäße Kautschukmischungen und erfindungsgemäße Kautschukvulkanisate können noch weitere bekannte Kautschukadditive enthalten. Bevorzugt ist mindestens ein Reversionsschutzmittel enthalten, besonders bevorzugt ein Reversionsschutzmittel ausgewählt aus der Gruppe enthaltend 1,3-Bis((3-methyl-2,5-dioxopyrrol-1-yl)methyl)benzol (CAS-Nr.. 119462-56-5), Hexamethylen-1,6-bis(thiosulfate) insbesondere als Dinatriumsalz-Dihydrat (CAS-Nr.: 5719-73-3) und 1,6-Bis(N,N-dibenzylthiocarbamoyldithio)hexan (CAS-Nr. 151900-44-6). Die genannten Reversionsschutzmittel können einzeln oder in beliebiger Mischung untereinander eingesetzt werden.

In einer bevorzugten Ausführungsform enthält die Kautschukmischung 0,1 bis 15 phr des Reversionsschutzmittels 1,6-Bis(N,N-dibenzylthiocarbamoyldithio)hexan (CAS-Nr. 151900-44-6), vorzugsweise 0,1-2 phr, besonders bevorzugt 0,2-1,0 phr.

Bevorzugt erfolgt bei der erfindungsgemäßen Kautschukmischung die Zugabe des Additives der Formel (I) im ersten Teil des Mischprozesses bei beispielsweisen Massetemperaturen von 100 - 250 °C, sie kann jedoch auch später bei tieferen Temperaturen (40 - 100°C) beispielsweise zusammen mit Schwefel und/oder Beschleuniger erfolgen.

In einer weiteren bevorzugten Form, erfolgt bei der erfindungsgemäßen Kautschukmischung die Zugabe des Additives der Formel (I) sowie die Zugabe von 1,6-Bis(N,N-dibenzylthiocarbamoyldithio)hexan (CAS-Nr.: 151900-44-6) bevorzugt im ersten Teil des Mischprozesses bei beispielsweisen Massetemperaturen von 100 - 250 °C, sie kann jedoch auch später bei tieferen Temperaturen (40 - 100°C) beispielsweise zusammen mit Schwefel und/oder Beschleuniger erfolgen.

Das Additive der Formel (I) und/oder 1,6-Bis(N,N-dibenzylthiocarbamoyldithio)hexan (CAS-Nr.: 151900-44-6) können unabhängig voneinander sowohl in reiner Form als auch auf einen inerten, organischen oder anorganischen Träger, vorzugsweise einen Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert eingesetzt werden.

Das Additiv der Formel (I) kann auch als Mischung mit 1,6-Bis(N,N-dibenzylthiocarbamoyldithio)hexan (CAS-Nr.: 151900-44-6) dem Mischprozess zugegeben werden.

Besonders geeignet sind die erfindungsgemäßen Kautschukmischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen ein.

Ein weiterer Aspekt der vorliegenden Erfindung sind Vulkanisate erhältlich durch Vulkanisation der erfindungsgemäßen Kautschukmischung.

Die hergestellten Kautschukvulkanisate eignen sich zur Herstellung diverser Kautschukprodukte, beispielsweise zur Herstellung von Reifenbauteilen insbesondere für Reifenlaufflächen, Subtreads, Karkassen, Seitenwänden, verstärkten Seitenwänden für Notlaufreifen, Apexmischungen etc. sowie für die Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc.. Die erfindungsgemäßen Kautschukprodukte können insbesondere damit ausgestatteten Kraftfahrzeugen vorteilhafte Betriebseigenschaften verleihen. Daher sind solche Kraftfahrzeuge ebenfalls Gegenstand der vorliegenden Erfindung.

Die erfindungsgemäße Kautschukmischung und Kautschukvulkanisat enthalten ein oder mehrere Kautschuke wie beispielsweise Naturkautschuk (NR) und/oder Synthesekautschuke. Bevorzugte Synthesekautschuke sind beispielsweise
- BR: Polybutadien
- ABR: Butadien/Acrylsäure-C1-C4-alkylester-Copolymerisat
- CR: Polychloropren
- IR: Polyisopren
- SBR: Styrol/Butadien-Copolymerisate mit Styrolgehalten von 1 - 60, vorzugsweise 20-50 Gew-%
- IIR: Isobutylen/Isopren-Copolymerisate
- NBR: Butadien/Acrylnitril-Copolymerisate mit Acrylnitrilgehalten von 5-60, vorzugsweise 10-50 Gew.-%
- HNBR: teilhydrierter oder vollständig hydrierter NBR-Kautschuk
- EPDM: Ethylen/Propylen/Dien-Copolymerisate
- SIBR: Styrol/Isopren-Copolymerisate
- ENR: epoxidierter Naturkautschuk

Die erfindungsgemäße Kautschukmischung enthält vorzugsweise mindestens einen unpolaren Kautschuk ausgewählt aus der Gruppe bestehend aus NR, SBR, BR, IR, SIBR,IIR, ENR und EPDM, bevorzugt aus der Gruppe bestehend aus NR, SBR, BR, IIR und EPDM, besonders bevorzugt aus der Gruppe bestehend aus NR, BR und SBR wobei der Gesamtgehalt an diesen unpolaren Kautschuken in der Kautschukmischung typischerweise mindestens 50 phr, vorzugsweise mindestens 60 phr und besonders bevorzugt mindestens 70 phr beträgt.

Die erfindungsgemäßen Mischungen können auch polare Kautschuke beinhalten, insbesondere Kautschuke mit einem Löslichkeitsparameter von mehr als 17,6. Typischerweise ist der Gehalt an polaren Kautschuken in Form von NBR, HNBR, HXNBR und XNBR in der Kautschukmischung jeweils kleiner 10 phr, bevorzugt kleiner 1.0 phr, besonders bevorzugt kleiner 0,1 phr und ganz besonders bevorzugt kleiner 0,01 phr.

### Kieselsäure-basierender Füllstoff

Als kieselsäurehaltige Füllstoffe im Sinne dieser Erfindung werden folgende Stoffe verwendet:
- Kieselsäure, insbesondere Fällungskieselsäure oder pyrogene Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- natürliche Silikate, wie Kaolin und andere natürliche vorkommende Kieselsäuren,
sowie Mischungen dieser Stoffe.

Die genannten Kieselsäuren und Silikate können dabei auch in silanierter Form vorliegen, welche durch Behandlung mittels Chlorsilanen wie Monochlorsilan, Dichlorsilan, Trichlorsilan und Tetrachlorsilan, Organochlorsilanen wie Methyltrichlorsilan, Dimethyldichlorsilan, Trimethylchlorsilan, Ethyltrichlorsilan, Diethyldichlorsilan, Triethylchlorsilan sowie (Meth)acryloxy- und/oder Alkoxygruppen-haltige Silane wie Acryloxypropyltrimethoxysilan, (3-Mercaptopropyl)trimethoxysilan, 3-Glycidoxypropyltrimethoxysilan, 3-Aminopropyltrimethoxysilan, Mono-, Di-, Tri-, oder Tetramethoxysilan erhältlich sind. Entsprechende Herstellungsverfahren sind u.a. in EP 2 033 990 B1 angegeben.

### Ruß-Füllstoff

Zusätzlich oder alternativ zu den Kieselsäure-basierender Füllstoffen können Ruße, insbesondere sind hierfür nach dem Flammruß, Furnace- oder Gasruß-Verfahren hergestellt Ruße geeignet, welche BET-Oberflächen von 20 - 200 m²/g besitzen, wie SAF-, ISAF-, IISAF-, HAF-, FEF- oder GPF-Ruße eingesetzt werden.

Der Gesamtgehalt an Füllstoffen in der erfindungsgemäßen Kautschukmischung kann prinzipiell in beliebigen Grenzen variiert werden. Übliche Mengen sind 0,1 bis 200 phr, bevorzugt 30 - 150 phr. In einer bevorzugte Ausführungsform ist der Gehalt an Russ basierten Füllstoffen im Verhältnis zu Kieselsäure basierten Füllstoffen geringer.

Des Weiteren können erfindungsgemäße Kautschukmischungen und Kautschukvulkanisate einen oder mehrere, schwefelhaltige Silane und oder einen oder mehrere Vernetzer enthalten. Hierfür sind insbesondere Schwefel-basierende oder peroxidische Vernetzer geeignet, wobei Schwefel-basierte Vernetzer besonders bevorzugt sind.

Generell kann der erfindungsmäßen Kautschukmischung in beliebigen Mengen sogenannter Reclaim-Rubber, wie er beispielweise in der CN101628994 beschrieben wird, eingesetzt werden.

Als schwefelhaltige Silane für die erfindungsgemäße Kautschukmischung und Kautschukvulkanisate kommen bevorzugt Bis-(triethoxysilylpropyl)-tetrasulfan und das -disulfan sowie 3-(Triethoxysilyl)-1-propanthiol oder Silane wie Si 363 der Evonik, Deutschland oder Silan NXT bzw. NXT Z der Momentive (früher GE, USA), wobei der Alkoxy-Rest Methoxy oder Ethoxy bedeutet, in Einsatzmengen von 2 bis 20 Gew.-Teilen, bevorzugt 3-11 Gew.-Teilen jeweils berechnet als 100%iger Wirkstoff und bezogen auf 100 Gew.-Teile Kautschuk, in Frage. Es können aber auch Mischungen aus diesen schwefelhaltigen Silanen eingesetzt werden. Flüssige Schwefelhaltige Silane können zur besseren Dosierbarkeit und/oder Dispergierbarkeit auf einem Träger aufgezogen sein (dry liquid). Der Wirkstoffgehalt liegt vorzugsweise zwischen 30 und 70 Gew.-Teilen, bevorzugt 40 und 60 Gew.-Teilen je 100 Gew.-Teile dry liquid.

In einer bevorzugten Ausführungsform enthalten die vorliegenden Kautschukmischungen 50 bis 100 phr Kieselsäure-basierenden Füllstoff und 0,2 bis 12 phr an organischen Silanen, vorzugsweise schwefelhaltigen organischen Silanen, besonders bevorzugt Alkoxysilyl- und ganz besonders bevorzugt Trialkoxy-silylgruppen-haltigen schwefelhaltigen organischen Silanen.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropan-tri(meth)acrylat, Zinkdiacrylat, Zinkdimethacrylat, 1,2-Polybutadien oder N,N'-m-Phenylen-dimaleinimid geeignet.

Als Vernetzer kann Schwefel in elementarer löslicher oder unlöslicher Form oder in Form von Schwefelspendern eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), Tetramethylthiuramdisulfid (TMTD) und Tetrabenzylthiuramdisulfid (TBzTD) in Frage. In einer bevorzugten Ausführungsform enthält die Kautschukmischung 0,1-15 phr TBzTD, vorzugsweise 0,1-2 phr, besonders bevorzugt 0,1-0,5 phr.

Grundsätzlich kann die Vernetzung der erfindungsgemäßen Kautschukmischung mit Schwefel oder Schwefelspendern allein erfolgen, oder zusammen mit Vulkanisationsbeschleunigern, wofür z.B. Dithiocarbamate, Thiurame, Thiazole, Sulfenamide, Xanthogenate, bi- oder polycyclische Amine, Dithiophosphate, Caprolactame und Thioharnstoffderivate geeignet sind. Weiterhin sind auch Zink-diamindiisocyanat, Hexamethylentetramin, 1,3-Bis(citraconimidomethyl)benzol sowie zyklische Disulfane geeignet. Bevorzugt enthalten die erfindungsgemäßen Kautschukmischungen Schwefel-basierende Vernetzer und Vulkanisationsbeschleuniger.

Besonders bevorzugt werden als Vernetzungsmittel Schwefel, Magnesiumoxid und/oder Zinkoxid eingesetzt, denen die bekannten Vulkanisationsbeschleuniger, wie Merkaptobenzothiazole, Thiazolsulfenamide, Thiurame, Thiocarbamate, Xanthogenate und Thiophosphate zugesetzt werden.

Die Vernetzungsmittel und Vulkanisationsbeschleuniger werden bevorzugt in Mengen von 0,1 bis 10 phr, besonders bevorzugt von 0,1 bis 5 phr, in die erfindungsgemäßen Kautschukmischung eingesetzt.

Die erfindungsgemäße Kautschukmischung und das erfindungsgemäße Kautschukvulkansiat können weitere Kautschukhilfsmittel enthalten, wie beispielsweise Haftsysteme, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel.

Diese Kautschukhilfsmittel werden in üblichen Mengen eingesetzt, die sich u. a. nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z.B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) eingesetzt werden.

Weitere Alterungsschutzmittel sind Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), welche meist in Kombination mit obigen phenolischen Alterungsschutzmitteln eingesetzt werden. TMQ, MBI und MMBI werden vor allem für NBR-Kautschuke verwendet, welche peroxidisch vulkanisiert werden.

Die Ozonbeständigkeit kann durch Antioxidantien wie beispielsweise N-1,3-Dimethylbutyl-N'-phenyl-p-phenylendiamin (6PPD), N-1,4-Dimethylpentyl-N'-phenyl-p-phenylendiamin (7PPD), N,N'-Bis- (1,4-dimethylpentyl)-p-phenylendiamin (77PD), Enolether oder cyclische Acetale verbessert werden.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Kautschukmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können der erfindungsgemäßen Kautschukmischung und dem erfindungsgemäßen Kautschukvulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftsysteme basieren auf Resorcin, Formaldehyd und Silica, die sogenannten RFS- Direkthaftsysteme. Diese Direkthaftsysteme können in beliebiger Menge der erfindungsgemäßen Kautschukmischung, zu jedem Zeitpunkt des Einmischens in die erfindungsgemäße Kautschukmischung, eingesetzt werden.

Als Formaldehyd-Spender eignen sich neben Hexamethylentetramin auch Methylolaminderivate. Eine mögliche Haftverbesserung wird durch Zugabe von zur Kunstharzbildung befähigten Komponenten wie Phenol und oder Amine und Aldehyde oder Aldehyde abspaltende Verbindungen zu den bekannten Kautschukmischungen erzielt. Eine breite Anwendung als Harzbildungskomponenten in Kautschukhaftmischungen finden Resorzin und Hexamethylentetramin (HEXA) (GB-PS 801 928, FR-PS 1 021 959), gegebenenfalls in Kombination mit Kieselsäurefüllstoff (DE-AS 1 078 320).

Das erfindungsgemäße Kautschukvulkanisat kann beispielsweise zur Herstellung von Schaumstoffen verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitroso-pentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation der erfindungsgemäßen Kautschukmischungen erfolgt typischerweise bei Temperaturen von 100 - 250 °C, vorzugsweise 130 - 180 °C, wobei gegebenenfalls ein Druck von 10 - 200 bar vorherrscht.

Ein weiterer Gegenstand der vorliegenden Erfindung ist die Verwendung von Verbindungen der Formel (I) zur Herstellung der erfindungsgemäßen Kautschukmischungen, Vulkanisate und/oder Kautschukprodukte.

### Beispiele

Die Herstellung der erfindungsgemäßen Kautschukvulkanisate kann beispielsweise in folgenden Mischstufen erfolgen:

### 1. Mischstufe:

■ Kautschuk (z.B. Mischung aus SBR und BR) werden in einem Innenmischer vorgelegt und ca. 30 Sekunden gemischt
■ Gegebenenfalls Zugabe von hydroxylgruppenhaltigem oxidischem Füllstoff und Silan zur Oberflächenmodifizierung (z.B. Zugabe von zwei Drittel Kieselsäure, zwei Drittel Silan, mischen für ca. 60 Sekunden und weitere Zugabe von ein Drittel Kieselsäure, ein Drittel Silan, mischen für ca. 60 Sekunden)
■ Zugabe des Additivs der Formel (I) und gegebenenfalls Zugabe von Ruß, Öl, Alterungsschutzmitteln, Zinkoxid sowie Ozonschutzwachse, mischen für ca. 60 Sekunden.

Dieser Mischungsvorgang kann bei Temperaturen von 100 bis 170°C erfolgen, vorzugsweise im Bereich von 150°C.

### 2. Mischstufe:

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Verarbeitungstemperaturen liegen hierbei unter 60°C.

### 3. Mischstufe:

In der dritten Mischstufe erfolgt ein Nachzwicken bei 140 bis 170°C, vorzugsweise bei 150°C zum Beispiel in einem Kneter/Innenmischer.

### 4. Mischstufe:

Zugabe von Zusatzstoffen wie zum Beispiel Vulkanisationsbeschleuniger und/oder Schwefel-Vernetzer, vorzugsweise auf einer Walze bei niedrigen Temperaturen (< 80°C).

Geeignete Aggregate für die Mischungsherstellung sind an sich bekannt und schließen beispielsweise Walzen, Innenmischer oder auch Mischextruder ein.

### Herstellung der erfindungsgemäßen Kautschukvulkanisate

Aus den in Tabelle 1 aufgeführten Kautschuk-Rezepturen für die Beispiele 1 bis 3 sowie für die Referenzbeispiele wurden Vulkanisate hergestellt. Dazu wurden jeweils in einem mehrstufigen Mischprozess, wie unten beschrieben, die jeweiligen Bestandteile der Beispiele 1 bis 3 sowie der Referenzbeispiele gemischt und die Mischungen anschließend bei 170°C ausvulkanisiert.

### 1. Mischstufe:

■ BUNA^{®} CB 24 und BUNA^{®} VSL 5025-2 wurde in einem Innenmischer vorgelegt und ca. 30 Sekunden gemischt
■ Zugabe zwei Drittel VULKASIL^{®} S, zwei Drittel SI^{®} 69, zwei Drittel Additiv der Formel (I) mischen für ca. 60 Sekunden
■ Zugabe ein Drittel VULKASIL^{®} S, ein Drittel SI^{®} 69, ein Drittel Additiv der Formel (I) sowie TUDALEN 1849-TE, mischen ca. 60 Sekunden

Zugabe von CORAX^{®} N 339, EDENOR^{®} C 18 98-100, VULKANOX^{®} 4020/LG, VULKANOX^{®} HS/LG, ZINKWEISS ROTSIEGEL sowie ANTILUX^{®} 654, mischen für ca. 60 Sekunden

Dieser Mischungsvorgang erfolgte bei einer Temperatur von 150°C.

### 2. Mischstufe:

Nach Abschluss der ersten Mischstufe wurde das Mischstück von einem nachgeschalteten Walzwerk aufgenommen und zu einer Platte ausgeformt und für 24 Stunden bei Raumtemperatur gelagert.

Verarbeitungstemperaturen liegen hierbei unter 60°C.

### 3. Mischstufe:

In der dritten Mischstufe erfolgte ein Nachzwicken bei 150°C in einem Kneter.

### 4. Mischstufe:

Zugabe der Zusatzstoffe MAHLSCHWEFEL 90/95 CHANCEL, VULKACIT^{®} CZ/C, RHENOGRAN^{®} DPG-80 auf einer Walze bei Temperaturen unter 80°C.

Die hergestellten Kautschukmischungen und Vulkanisate wurden den unten angegebenen technischen Prüfungen unterzogen. Die ermittelten Werte sind ebenfalls Tabelle 2 zu entnehmen.

### Bestimmung der Eigenschaften von Kautschukmischung bzw. Vulkanisaten:

### Mooney-Viskositätsmessung:

Die Bestimmung erfolgte mittels Scherscheibenviskosimeter gemäß ASTM D 1646. Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

### Scorch-Verhalten (t 5):

Des Weiteren kann mit der gleichen Prüfung wie oben beschrieben auch das Scorch-Verhalten einer Mischung gemessen werden. Die gewählte Temperatur betrug 130°C. Der Rotor läuft solang, bis der Drehmomentwert nach Durchlaufen eines Minimums auf 5 Mooney-Einheiten relativ zum Minimumwert angestiegen ist (t5). Je größer der Wert ist (Einheit Sekunden), umso langsamer findet die Anvulkanisation statt und umso höher ist die Verarbeitungssicherheit.

### Rheometer (Vulkameter) Ausvulkanisationszeit 170°C (t95):

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A mittels eines digitalen Shore-Härte-Testers (Zwick GmbH & Co. KG, Ulm) bestimmt wurden. Die Härte eines Kautschukvulkanisats gibt einen ersten Hinweis über dessen Steifigkeit wieder.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

**Tabelle 1: Kautschuk-Rezeptur**

| Im Folgenden soll die vorliegende Erfindung durch Beispiele erläutert werden ohne diese jedoch darauf zu beschränken. | | | | | |
|---|---|---|---|---|---|
| Bestandteile der erfindungsgemäßen Kautschukzubereitungen: | | | | | |
| | Kautschuk-rezeptur Referenz 1 | Kautschuk-rezeptur Referenz 2 | Kautschuk-rezeptur Beispiel 1 | Kautschuk-rezeptur Beispiel 2 | Kautschuk-rezeptur Beispiel 3 |
| BUNA CB 24 | 30 | 30 | 30 | 30 | 30 |
| BUNA VSL 5025-2 | 96 | 96 | 96 | 96 | 96 |
| CORAX N 339 | 6,4 | 6,4 | 6,4 | 6,4 | 6,4 |
| VULKASIL S | 80 | 80 | 80 | 80 | 80 |
| TUDALEN 1849-TE | 8 | 8 | 8 | 8 | 8 |
| EDENOR C 18 98-100 | 1 | 1 | 1 | 1 | 1 |
| VULKANOX 4020/LG | 1 | 1 | 1 | 1 | 1 |
| VULKANOX HS/LG | 1 | 1 | 1 | 1 | 1 |
| ZINKWEISS ROTSIEGEL | 2,5 | 2,5 | 2,5 | 2,5 | 2,5 |
| ANTILUX 654 | 1,5 | 1,5 | 1,5 | 1,5 | 1,5 |
| SI 69 | 6,4 | 6,4 | 6,4 | 6,4 | 6,4 |
| VULKACIT CZ/C | 1,5 | 1,5 | 1,5 | 1,5 | 1,5 |
| Mahlschwefel 90/95 Chancel | 1,5 | 1,5 | 1,5 | 1,5 | 1,5 |
| Vulcuren | - | 0,4 | 0,4 | 0,4 | - |
| RHENOGRAN DPG-80 | 2,5 | - | - | - | - |
| Triacetin (Additiv der Formel (I)) | - | - | 2 | 8 | 8 |

| | | | | | |
|---|---|---|---|---|---|
| Mengenangaben in phr (Gewichtsteile pro 100 Teile Kautschuk) | | | | | |

| Handelsname | Erläuterung | Hersteller/Vertrieb |
|---|---|---|
| BUNA CB 24 | BR | Lanxess Deutschland GmbH |
| BUNA VSL 5025-2 | SBR | Lanxess Deutschland GmbH |
| CORAX N 339 | Ruß | Degussa-Evonik GmbH |
| VULKASIL S | Kieselsäure | Lanxess Deutschland GmbH |
| RHENOGRAN DPG-80 | Diphenylguanidin | RheinChemie |
| TUDALEN 1849-TE | Mineralöl | Hansen&Rosenthal KG |
| EDENOR C 18 98-100 | Stearinsäure | Cognis Deutschland GmbH |
| VULKANOX 4020/LG | N-1,3-Dimethylbutyl-N-phenyl-p-phenylendiamin | Lanxess Deutschland GmbH |
| VULKANOX HS/LG | 2,2,4-Trimethyl-1,2-dihydrochinolin polymerisiert | Lanxess Deutschland GmbH |
| ZINKWEISS ROTSIEGEL | Zinkoxid | Grillo Zinkoxid GmbH |
| ANTILUX 654 | Lichtschutzwachs | RheinChemie Rheinau GmbH |
| SI 69 | Bis(triethoxysilylpropyl)tetrasulfid | Evonik Industries |
| VULKACIT CZ/C | N-cyclohexyl-2-benzothiazol-sulfenamid | Lanxess Deutschland GmbH |
| Vulcuren | 1,6-bis(N,N'-dibenzylthiocarbamoyldithio)-hexane | Lanxess Deutschland GmbH |
| Triacetin | Glycerintriacetat | Lanxess Deutschland GmbH |
| MAHLSCHWEFEL 90/95 CHANCEL | Schwefel | Solvay Deutschland GmbH |

**Tabelle 2: Zusammenstellung der Ergebnisse**

| | | Kautschuk-rezeptur Referenz 1 | Kautschuk-rezeptur Referenz 2 | Kautschuk-rezeptur Beispiel 1 | Kautschuk-rezeptur Beispiel 2 | Kautschuk-rezeptur Beispiel 3 |
|---|---|---|---|---|---|---|
| ML 1+4 (Mooney Viskosität) | ME | 87 | 92 | 89 | 81 | 81 |
| MS-t5 (Scorch-Zeit) | sec | 1344 | 1435 | 1588 | 2036 | 2998 |
| Ausvulkanisationszeit (t95) | s | 1253 | 1167 | 1405 | 1554 | 2030 |
| Härte Mittelwert | Shore A | 70 | 70 | 70 | 72 | 68 |
| Bruchdehnung | % | 351 | 365 | 359 | 358 | 400 |
| Zugfestigkeit | MPa | 18,9 | 19,8 | 20,0 | 18,8 | 18,8 |
| Abrieb DIN 53516 | mm³ | 67 | 60 | 54 | 53 | 44 |
| Verlustfaktor tan d (60°C) | | 0,134 | 0,123 | 0,130 | 0,122 | 0,137 |

Überraschend wurde nun gefunden, dass die erfindungsgemäßen Kautschukmischungen deutlich längere Scorchzeiten (MS-t5) und niedrige Mooney Viskositäten aufweisen und die daraus erhaltenen Vulkanisate exzellente Abriebwerte, sowie eine hohe Shore A Härte, Zugfestigkeit, Bruchdehnung und niedrige tan d-Werte (60°C) zeigen

Die erfindungsgemäßen Kautschukmischungen zeigten keine Dispersionsprobleme. Bei der Verarbeitung wird wenig oder kein Anilin freigesetzt.

## Patentansprüche

1. Im Wesentlichen Diphenylguanidin-freie Kautschukmischung enthaltend zumindest
- einen Kautschuk,
- einen Kieselsäure-basierenden Füllstoff und/oder Ruß,
- einen kurzkettigen Alkylester des Glycerins gemäß Formel (I) 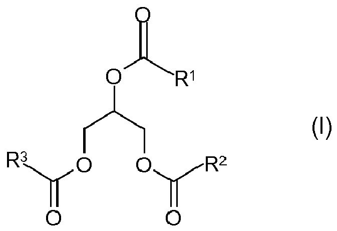 worin
R¹, R², R³ unabhängig voneinander für Wasserstoff oder einen geradkettigen oder verzweigten C₁-C₄ -Alkylrest, vorzugsweise für einen Methylrest stehen.

2. Kautschukmischung nach Anspruch 1, **dadurch gekennzeichnet, dass** sie mindestens ein Reversionsschutzmittel, vorzugsweise ein Reversionsschutzmittel ausgewählt aus 1,6-Bis(N,N-dibenzylthiocarbamoyldithio)-hexan (CAS-Nr.: 151900-44-6), 1,3-Bis((3-methyl-2,5-dioxopyrrol-1-yl)methyl)benzol (CAS-Nr.. 119462-56-5) oder Hexamethylen-1,6-bis(thiosulfat) insbesondere als Dinatriumsalz-Dihydrat enthält.

3. Kautschukmischung nach einem der Ansprüche 1 oder 2, **dadurch gekennzeichnet, dass** sie 0,1 bis 15 phr, vorzugsweise 0,1 bis 2 phr, besonders bevorzugt 0,2 bis 1 phr 1,6-Bis(N,N-dibenzylthiocarbamoyldithio)-hexan (CAS-Nr.: 151900-44-6) enthält.

4. Kautschukmischung nach einem der Ansprüche 1 bis 3, **dadurch gekennzeichnet dass** die Mischung mindestens einen unpolaren Kautschuk ausgewählt aus der Gruppe bestehend aus NR, SBR, BR, IR, IIR, ENR und EPDM, bevorzugt NR, SBR, BR, IIR und EPDM, besonders bevorzugt NR, BR und SBR enthält.

5. Kautschukmischung nach einem der Ansprüche 1 bis 4, **dadurch gekennzeichnet, dass** sie polare Kautschuke enthält, wobei der Gehalt an NBR, HNBR, HXNBR und XNBR vorzugsweise jeweils kleiner 10 phr, besonders bevorzugt jeweils kleiner 1.0 phr, weiter bevorzugt jeweils kleiner 0,1 phr und meist bevorzugt jeweils kleiner 0,01 phr ist.

6. Kautschukmischung nach einem der Ansprüche 1 bis 4, **dadurch gekennzeichnet, dass** sie mindestens einen Vernetzer, vorzugsweise mindestens einen peroxidischen oder Schwefel-basierenden Vernetzer, besonders bevorzugt mindestens einen Vernetzer aus der Gruppe enthaltend Schwefel, Dimorpholyldisulfid (DTDM), 2-Morpholinodithiobenzothiazol (MBSS), Caprolactamdisulfid, Dipentamethylenthiuramtetrasulfid (DPTT), Tetramethylthiuramdisulfid (TMTD) und Tetrabenzylthiuramdisulfid (TBzTD), ganz besonders bevorzugt TBzTD enthält.

7. Kautschukmischung nach einem der Ansprüche 1 bis 6, **dadurch gekennzeichnet, dass** der Gehalt an Verbindungen der Formel (I) von 0,1 bis 40 phr, bevorzugt von 0,2 bis 20 phr, besonders bevorzugt von 0,5 bis 15 phr, ganz besonders bevorzugt 1 bis 12 phr, weiter bevorzugt 2 bis 10 phr und meist bevorzugt 3 bis 8 phr beträgt.

8. Kautschukmischung nach einem der Ansprüche 1 bis 7, **dadurch gekennzeichnet, dass** sie 50 bis 100 phr Kieselsäure-basierenden Füllstoff und 0,2 bis 12 phr an organischen Silanen, vorzugsweise schwefelhaltigen organischen Silanen, besonders bevorzugt Alkoxysilyl- und ganz besonders bevorzugt Trialkoxy-silylgruppen enthaltenden schwefelhaltigen organischen Silanen enthält.

9. Kautschukmischung nach einem der Ansprüche 1 bis 8, **dadurch gekennzeichnet, dass** die Verbindung der Formel (I) auf einem Träger, vorzugsweise einem Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert eingesetzt wird.

10. Kautschukmischung nach einem der Ansprüche 1 bis 9, **dadurch gekennzeichnet, dass** der Gehalt an Cellulose und/oder Cellulosederivaten ≤ 1phr, vorzugsweise < 0,5 phr, besonders bevorzugt < 0.1 phr und meist bevorzugt 0 phr beträgt.

11. Verfahren zur Herstellung einer Kautschukmischung nach einem der Ansprüche 1 bis 10, **dadurch gekennzeichnet, dass** mindestens je ein Kautschuk, ein Kieselsäure-basierender Füllstoff und/oder Ruß und kurzkettiger Alkylester des Glyzerins gemäß Formel (I) in Anspruch 1, vorzugsweise bei einer Temperatur von 40 bis 200°C besonders bevorzugt bei 80 bis 150°C miteinander vermischt werden.

12. Verfahren zur Herstellung von Kautschukvulkanisaten **dadurch gekennzeichnet, dass** man die Kautschukmischung gemäß einem der Ansprüche 1 bis 10 vorzugsweise bei einer Temperatur von 100 bis 250°C, besonders bevorzugt von 130 bis 180°C vulkanisiert.

13. Vulkanisate, erhältlich durch Vulkanisation von Kautschukmischungen gemäß einem der Ansprüche 1 bis 10.

14. Kautschukprodukte, bevorzugt Reifen enthaltend ein oder mehrere Kautschukvulkanisate gemäß Anspruch 13.

15. Verwendung von Verbindungen der Formel (I) gemäß Anspruch 1 zur Herstellung von Kautschukmischungen gemäß einem der Ansprüche 1 bis 10, Vulkanisaten gemäß Anspruch 13 oder Kautschukprodukten gemäß Anspruch 14.
